Europäisches Patentamt

European Patent Office

Office européen des brevets

(19)

(11) **EP 0 751 201 B1**

(12) **FASCICULE DE BREVET EUROPEEN**

(45) Date de publication et mention
de la délivrance du brevet:
**08.09.1999 Bulletin 1999/36**

(51) Int Cl.6: **C09K 11/81**

(21) Numéro de dépôt: **96401383.3**

(22) Date de dépôt: **24.06.1996**

(54) **Utilisation comme luminophore dans les systèmes à plasma d'un composé à base d'un phosphate de terre rare**

Anwendung als Phosphor eines Seltenerdmetallphosphate-Verbundmaterial für Plasmasystemen

Use as phosphor of a rare earth phosphate compound for plasma systems

(84) Etats contractants désignés:
**AT DE FR GB IT NL**

(30) Priorité: **28.06.1995 FR 9507759**

(43) Date de publication de la demande:
**02.01.1997 Bulletin 1997/01**

(73) Titulaire: **RHODIA CHIMIE**
**92408 Courbevoie Cédex (FR)**

(72) Inventeur: **Huguenin, Denis**
**92600 Asnières-sur-Seine (FR)**

(74) Mandataire: **Dubruc, Philippe et al**
**RHODIA SERVICES**
**Direction de la Propriété Industrielle**
**25, quai Paul Doumer**
**92408 Courbevoie Cédex (FR)**

(56) Documents cités:
**EP-A- 0 581 622**     **DE-A- 2 450 153**

- **DATABASE WPI Section Ch, Week 7647 Derwent Publications Ltd., London, GB; Class L03, AN 76-87848X XP002014661 & JP-A-51 114 388 ( HITACHI KK) , 9 Octobre 1976**
- **JOURNAL OF LUMINESCENCE, NOV.-DEC. 1980, NETHERLANDS, vol. 22, no. 1, ISSN 0022-2313, pages 1-16, XP002014660 DORNAUF H ET AL: "Concentration-dependent fluorescence-quenching in La/sub 1-x/Pr/sub x/P/sub 5/O/sub 14/"**

Remarques:
Le dossier contient des informations techniques présentées postérieurement au dépôt de la demande et ne figurant pas dans le présent fascicule.

EP 0 751 201 B1

## Description

La présente invention concerne l'utilisation comme luminophore dans les systèmes à plasma d'un composé à base d'un phosphate de terre rare.

Les systèmes à plasma (écrans et lampes) font partie des nouvelles techniques de visualisation et d'éclairage qui sont en train de se développer. Un exemple concret est celui du remplacement des écrans de télévision actuels par des écrans plats, moins lourds et de plus grandes dimensions, remplacement qui est sur le point d'être résolu par l'utilisation de panneaux à plasma.

Dans les systèmes à plasma, un gaz introduit dans une enceinte est ionisé sous l'effet d'une décharge électrique. Lors de ce processus, des rayonnements électromagnétiques de haute énergie sont émis. Les photons sont dirigés vers un matériau luminescent.

Pour être efficace, ce matériau doit être un luminophore absorbant dans le domaine d'émission du plasma, émettant dans le domaine du visible avec le rendement le plus élevé possible et de couleur appropriée.

L'objet de l'invention est de fournir un tel matériau luminophore.

Dans ce but, selon l'invention, on utilise comme luminophore, dans des systèmes à plasma, un composé à base d'un phosphate d'yttrium, de lanthane, de gadolinium ou de lutécium, dopé par au moins une terre rare choisie dans le groupe comprenant le terbium, le praséodyme ou le cérium.

D'autres caractéristiques, détails et avantages de l'invention apparaîtront plus clairement à la lecture de la description qui va suivre.

L'invention concerne l'utilisation du composé décrit ci-dessus comme luminophore dans des conditions qui sont celles des systèmes à plasma. On entend, par là et pour la présente invention, tous les systèmes mettant en oeuvre un gaz émettant après ionisation un rayonnement correspondant au moins à des longueurs d'onde situées entre 10 et 200 nm, c'est-à-dire le domaine de l'ultra-violet lointain.

Comme systèmes de ce type, on peut citer les écrans et les lampes à plasma.

Selon l'invention, on utilise un composé comprenant une matrice du type phosphate d'yttrium, de lanthane, de gadolinium ou de lutécium.

Les phosphates utilisables peuvent être de plusieurs types. Ce peut être des orthophosphates de formule $LnPO_4$, Ln représentant un des éléments mentionnés ci-dessus. On peut utiliser aussi des métaphosphates de formule $LnP_3O_9$ ou des pentaphosphates de formule $LnP_5O_{14}$.

La matrice du type décrit ci-dessus est dopée par au moins une terre rare qui est choisie dans le groupe comprenant le terbium, le praséodyme ou le cérium.

Le choix de la terre rare se fait en fonction de la couleur d'émission souhaitée.

La teneur en terre rare dopante exprimée en pourcentage atomique par rapport à la teneur totale en terres rares dans le phosphate (terre rare dopante / terre rare dopante + Ln) est généralement comprise entre 10 et 50%, et plus particulièrement entre 20 et 45%.

Selon un mode de réalisation particulier de l'invention, le phosphate utilisé est un phosphate de lanthane.

Selon un autre mode de réalisation particulier, on utilise comme terres rares dopantes le terbium et le cérium en combinaison; le terbium peut être majoritaire par rapport au cérium, c'est-à-dire dans une proportion atomique Tb/(Ce + Tb) supérieure à 50%, plus particulièrement dans une proportion atomique Tb/(Ce + Tb) d'au moins 80%. A titre d'exemple, on peut donner le produit de formule :

$$La_{0,76}Tb_{0,22}Ce_{0,02}PO_4$$

Selon une autre variante de l'invention, il peut être intéressant d'utiliser des phosphates de granulométrie spécifique.

La taille moyenne des phosphates peut ainsi être située entre 1 et 20μm, et plus particulièrement entre 2 et 6μm.

En outre, leur indice de dispersion peut être inférieur à 0,5, plus particulièrement inférieur à 0,4.

Le diamètre moyen des particules est mesuré au moyen d'un granulomètre laser type CILAS (CILAS HR 850).

L'indice de dispersion I est quant à lui déterminé par la formule :

$$I = \frac{\phi_{84} - \phi_{16}}{2\phi_{50}}$$

dans laquelle :

- $\phi_{84}$ est le diamètre des particules pour lequel 84% des particules ont un diamètre inférieur à $\phi_{84}$,
- $\phi_{16}$ est le diamètre des particules pour lequel 16% des particules ont un diamètre inférieur à $\phi_{16}$,
- et $\phi_{50}$ est le diamètre moyen des particules.

Les phosphates utilisés et plus particulièrement les orthophosphates, peuvent se présenter sous une forme cristalline monoclinique.

Les phosphates utilisés dans le cadre de la présente invention peuvent être obtenus par tout procédé connu. Un procédé particulier donné à titre non limitatif va être décrit ci-dessous.

Ce procédé consiste à réaliser une précipitation directe et à pH contrôlé en faisant réagir (i) une première solution contenant des sels solubles des terres rares, ces éléments étant alors présents dans les proportions stoechiométriques requises pour l'obtention du produit de formule désirée, avec (i) une deuxième solution contenant des ions phosphates.

La solution de sels solubles des terres rares est introduite, progressivement et en continu, dans la solution contenant les ions phosphates.

Le pH initial de la solution contenant les ions phosphates est inférieur à 2, et de préférence compris entre 1 et 2.

Le pH du milieu de précipitation est ensuite contrôlé à une valeur de pH inférieure à 2, et de préférence comprise entre 1 et 2.

Par "pH contrôlé", on entend un maintien du pH du milieu de précipitation à une certaine valeur, constante ou sensiblement constante, par addition de composés basiques ou de solutions tampons, dans la solution contenant les ions phosphates, et ceci simultanément à l'introduction dans cette dernière de la solution contenant les sels solubles de terres rares. Le pH du milieu variera ainsi d'au plus 0,5 unité de pH autour de la valeur de consigne fixée, et de préférence encore d'au plus 0,1 unité de pH autour de cette valeur. La valeur de consigne fixée correspondra avantageusement au pH initial (inférieur à 2) de la solution contenant les ions phosphates.

Ce contrôle du pH est avantageusement réalisé par addition d'un composé basique comme cela sera expliqué ci-dessous.

La précipitation est réalisée de préférence en milieu aqueux à une température qui n'est pas critique et qui est comprise, avantageusement, entre la température ambiante (15°C - 25°C) et 100°C. Cette précipitation a lieu sous agitation du milieu de réaction.

Les concentrations des sels de terres rares dans la première solution peuvent varier dans de larges limites. Ainsi, la concentration totale en terres rares peut être comprise entre 0,01 mol/litre et 3 mol/litre.

Les sels de terres rares convenables sont notamment les sels solubles en milieu aqueux, comme par exemple les nitrates, chlorures, acétates, carboxylates, ou un mélange de ceux-ci. Les sels préférés selon l'invention sont les nitrates.

Les ions phosphates destinés à réagir avec la solution des sels de terres rares peuvent être apportés par des composés purs ou en solution, comme par exemple l'acide phosphorique, les phosphates d'alcalins ou d'autres éléments métalliques donnant avec les anions associés aux terres rares un composé soluble.

Selon une variante préférée, les ions phosphates sont ajoutés sous forme de phosphates d'ammonium car le cation ammonium se décomposera lors de la calcination ultérieure permettant ainsi d'obtenir un phosphate de terres rares de grande pureté. Parmi les phosphates d'ammonium, le phosphate diammonique ou monoammonique sont les composés préférés pour la mise en oeuvre de l'invention.

Les ions phosphates sont présents en quantité telle que l'on ait, entre les deux solutions, un rapport molaire PO4/Ln supérieur à 1, et avantageusement compris entre 1,1 et 3.

Comme indiqué précédemment, la solution contenant les ions phosphates doit présenter initialement (c'est à dire avant le début de l'introduction de la solution de sels de terres rares) un pH inférieur à 2, et de préférence compris entre 1 et 2. Aussi, si la solution utilisée ne présente pas naturellement un tel pH, ce dernier est amené à la valeur convenable désirée soit par ajout d'une base (par exemple de l'ammoniaque, dans le cas d'une solution initiale d'acide phosphorique) soit par ajout d'un acide (par exemple de l'acide nitrique, dans le cas d'une solution initiale de phosphate diammonique).

Par la suite, au cours de l'introduction de la solution contenant le ou les sels de terres rares, le pH du milieu de précipitation diminue progressivement; aussi, dans le but de maintenir le pH du milieu de précipitation à la valeur constante de travail désirée, laquelle doit être inférieure à 2 et de préférence comprise entre 1 et 2, on introduit simultanément dans ce milieu une base.

Comme composé basique convenable, on peut citer, à titre d'exemples, les hydroxydes métalliques (NaOH, KOH, CaOH2,....) ou l'hydroxyde d'ammonium, ou tout autre composé basique dont les espèces le constituant ne formeront aucun précipité lors de leur addition dans le milieu réactionnel, par combinaison avec une des espèces par ailleurs contenues dans ce milieu, et permettant un contrôle du pH du milieu de précipitation.

A l'issue de l'étape de précipitation, on obtient directement un précipité de phosphate qui peut être récupéré par tout moyen connu en soi, en particulier par simple filtration. Le produit récupéré peut ensuite être lavé, par exemple avec de l'eau, dans le but de le débarasser des éventuelles impuretés, notamment des groupements nitrates et/ou ammoniums adsorbés.

Le précipité obtenu est ensuite soumis à un traitement thermique à une température généralement supérieure à 600°C et avantageusement comprise entre 900 et 1200°C. Ce traitement thermique ou calcination permet d'obtenir un produit présentant des propriétés de luminescence. La calcination peut être indifféremment conduite sous atmosphère réductrice (hydrogène par exemple) ou neutre (argon par exemple), ou des mélanges de celles-ci ou encore sous atmosphère non réductrice, en particulier sous atmosphère oxydante comme par exemple de l'air.

Les phosphates utilisés dans le cadre de la présente invention peuvent aussi être obtenus par chamottage. Dans ce cas, on peut procéder en formant un mélange des oxydes des différentes terres rares ou en prenant un oxyde mixte de terres rares et en réalisant une phosphatation de ce mélange ou de cet oxyde mixte par calcination en présence de phosphate diammonique.

Pour développer encore les propriétés de luminescence, on peut soumettre les phosphates à un traitement thermique en présence d'un flux.

A titre de flux convenables, on peut notamment citer le fluorure de lithium, le chlorure de lithium, le chlorure de potassium, le chlorure d'ammonium, l'oxyde de bore et les phosphates d'ammonium, cette liste n'étant bien entendu nullement limitative. Le flux est mélangé au phosphate mixte à traiter, puis le mélange est porté à une température supérieure à 1000°C, généralement comprise entre 1000°C et 1200°C, et ceci sous une atmosphère adaptée à la nature de la terre rare et qui est réductrice dans le cas du cérium et du terbium par exemple. Après traitement, le produit est lavé puis rincé, de manière à obtenir un luminophore dans un état désaggloméré.

Comme indiqué plus haut, les composés à base de phosphates tels qu'ils viennent d'être décrits présentent des propriétés de luminescence sous excitation électromagnétique dans le domaine des longueurs d'onde utilisées dans les systèmes à plasma.

De ce fait, ils peuvent être utilisés comme luminophore dans ces systèmes et plus généralement, ils peuvent rentrer dans la fabrication de ceux-ci. La mise en oeuvre des luminophores se fait selon des techniques bien connues par exemple par dépôts par sérigraphie, électrophorèse ou sédimentation.

Un exemple est donné ci-dessous.

### EXEMPLE

### Préparation des phosphates

On donne ci-dessus la préparation du produit de formule $La_{0,55}Ce_{0,30}Te_{0,15}PO_4$. Les autres phosphates de formule $La_{0,88}Tb_{0,12}PO_4$, $La_{0,83}Tb_{0,17}PO_4$, $La_{0,70}Tb_{0,30}PO_4$ et $La_{0,78}Tb_{0,22}PO_4$ sont préparés de la même manière en adaptant les proportions de réactifs.

Dans 500 ml d'une solution d'acide phosphorique H3PO4, préalablement amenés à pH 1,4 par addition d'ammoniaque et portés à 60°C, sont ajoutés en une heure 500 ml d'une solution de nitrates de terres rares de concentration globale de 1,5 mol/l et se décomposant comme suit : 0,825 mol/l de La(NO3)3; 0,45 mol/l de Ce(NO3)3 et 0,225 mol/l de Tb(NO3)3.

Le rapport molaire phosphate/Terres Rares est de 1,15. Le pH au cours de la précipitation est régulé à 1,4 par addition d'ammoniaque.

A l'issue de l'étape de précipitation, le milieu réactionnel est encore maintenu une heure à 60°C.

Le précipité est ensuite récupéré par filtration, lavé à l'eau puis séché à 60°C sous air. Le produit se présente alors sous la forme d'une poudre blanche (aspect d'un talc) constituée de particules (agglomérats) de 3 à 6 microns formées d'agrégats compacts d'environ 250 nm formés eux-mêmes par l'agrégation de cristallites élémentaires de tailles comprises entre 30 et 150 nm. La poudre est ensuite soumise à un traitement thermique à 1150°C sous air.

L'analyse aux rayons X montre que le produit est un orthophosphate de structure cristalline monoclinique. Il est constitué de grains compacts d'environ 250 nm agglomérés sous forme de particules sphériques de tailles comprises entre 3 et 6 microns. La granulométrie CILAS, mesurée après désagglomération sommaire sous ultra-sons, donne un $\phi_{50}$ de 4,5 microns avec une répartition très resserrée puisque l'indice de dispersion est inférieur à 0,4.

### Performances des phosphates

Les performances sont évaluées de deux manières

A - La poudre est compactée à la main dans des cavités cylindriques de 8mm de diamètre qui sont ensuite disposées dans une enceinte sous un vide de $10^{-6}$ Torr à température ambiante. La source d'excitation est une émission électromagnétique issue d'un synchroton et de longeur d'onde comprise entre 150 et 350 nm. Les valeurs de rendement correspondent au nombre de photons émis dans le visible comparé au nombre de photons incidents à 160 nm et 200nm respectivement.

| Produit | Rendement % à 200nm | Rendement % à 160nm |
|---|---|---|
| $La_{0.88}Tb_{0.12}PO_4$ | 60 | 72 |
| $La_{0.83}Tb_{0.17}PO_4$ | 65 | 76 |
| $La_{0.78}Tb_{0.22}PO_4$ | 70 | 85 |
| $La_{0.55}Ce_{0.30}Tb_{0.15}PO_4$ | 70 | 85 |

B - Les produits sont évalués sur une cellule de test d'écran plasma contenant un gaz du type hélium-néon. On mesure le rendement lumineux avec un photomètre et on le compare avec celui du silicate de zinc dopé au manganèse et auquel on attribue arbitrairement la valeur de 100.

| Produit | Rendement |
|---|---|
| $La_{0.83}Tb_{0.17}PO_4$ | 125 |
| $La_{0.78}Tb_{0.22}PO_4$ | 134 |
| $La_{0.70}Tb_{0.30}PO_4$ | 120 |

On voit que les rendements sont supérieurs à celui obtenu avec le silicate de zinc dopé utilisé dans l'art antérieur.

## Revendications

1. Utilisation comme luminophore dans des systèmes à plasma d'un composé à base d'un phosphate d'yttrium, de lanthane, de gadolinium ou de lutécium, dopé par au moins une terre rare choisie dans le groupe comprenant le terbium, le praséodyme et le cérium.

2. Utilisation selon la revendication 1, caractérisée en ce que le phosphate est choisi parmi ceux répondant à la formule $LnPO_4$, $LnP_3O_9$, $LnP_5O_{14}$, Ln désignant l'yttrium, le lanthane, le gadolinium ou le lutécium.

3. Utilisation selon la revendication 1 ou 2, caractérisée en ce que le phosphate est un phosphate de lanthane.

4. Utilisation selon l'une des revendications précédentes, caractérisée en ce que le phosphate présente une teneur en terre rare dopante exprimée en pourcentage atomique, par rapport à la teneur totale en terres rares du phosphate comprise entre 10 et 50%, plus particulièrement entre 20 et 45%.

5. Utilisation selon l'une des revendications précédentes, caractérisée en ce que le dopant est le terbium et le cérium en combinaison, plus particulièrement le terbium étant majoritaire par rapport au cérium.

6. Utilisation selon la revendication 5, caractérisée en ce que le terbium est présent dans une proportion atomique Tb/(Ce +Tb) d'au moins 80%.

7. Utilisation selon l'une des revendications précédentes, caractérisée en ce que le phosphate présente une taille moyenne de particules comprise entre 1 et 20µm et un indice de dispersion inférieur à 0,5.

## Patentansprüche

1. Verwendung als Luminophor in Plasmasystemen einer Verbindung auf Basis eines Phosphats von Yttrium, Lanthan, Gadolinium oder Lutetium, dotiert mit zumindest einer seltenen Erde, ausgewählt unter Terbium, Praseodym und Cer.

2. Verwendung gemäß Anspruch 1, dadurch gekennzeichnet, daß das Phosphat unter denjenigen der Formel $LnPO_4$,

$LnP_3O_9$, $LnP_5O_{14}$ ausgewählt wird, wobei Ln für Yttrium, Lanthan, Gadolinium oder Lutetium steht.

3. Verwendung nach Anspruch 1 oder 2, dadurch gekennzeichnet, daß das Phosphat ein Lanthanphosphat ist.

4. Verwendung gemäß einem der vorhergehenden Ansprüche, dadurch gekennzeichnet, daß das Phosphat einen dotierenden Gehalt an seltener Erde, ausgedrückt in Atomprozentanteil, bezogen auf den Gesamtgehalt an seltenen Erden des Phosphats, zwischen 10 und 50%, insbesondere zwischen 20 und 45% aufweist.

5. Verwendung gemäß einem der vorhergehenden Ansprüche, dadurch gekennzeichnet, daß die Dotierung aus einer Kombination von Terbium und Cer besteht, insbesondere wobei das Terbium in Bezug auf das Cer den überwiegenden Anteil ausmacht.

6. Verwendung gemäß Anspruch 5, dadurch gekennzeichnet, daß das Terbium in einem Atomanteil Tb/(Ce + Tb) von zumindest 80% vorliegt.

7. Verwendung gemäß einem der vorhergehenden Ansprüche, dadurch gekennzeichnet, daß das Phosphat eine durchschnittliche Teilchengröße zwischen 1 und 20 µm und einen Dispersionsindex von geringer als 0,5 aufweist.

## Claims

1. Use as a luminophor in plasma systems of a compound based on an yttrium, lanthanum, gadolinium or lutecium phosphate doped with at least one rare earth chosen from the group comprising terbium, praseodymium and cerium.

2. Use according to claim 1, characterized in that the phosphate is chosen from those corresponding to the formula $LnPO_4$, $LnP_3O_9$, $LnP_5O_{14}$, Ln denoting yttrium, lanthanum, gadolinium or lutecium.

3. Use according to claim 1 or 2, characterized in that the phosphate is a lanthanum phosphate.

4. Use according to one of the preceding claims, characterized in that the phosphate has a rare-earth dopant content, expressed as an atomic percentage, relative to the total rare-earth content of the phosphate, of between 10 and 50 %, more particularly between 20 and 45 %.

5. Use according to one of the preceding claims, characterized in that the dopant is a combination of terbium and cerium, terbium being more particularly present in a greater amount than cerium.

6. Use according to claim 5, characterized in that terbium is present in an atomic proportion Tb/(Ce+Tb) of at least 80 %.

7. Use according to one of the preceding claims, characterized in that the phosphate has a mean particle size of between 1 and 20 µm and a dispersion index of less than 0.5.